# EUROPEAN PATENT SPECIFICATION

(11) **EP 1 138 722 B1**
(45) Date of publication and mention of the grant of the patent: **05.10.2005**
(21) Application number: 00107034.1
(22) Date of filing: 31.03.2000
(51) Int. Cl.: C08L 101/08, C08K 5/17, C08F 8/32

(54) **One-pack type thermally crosslinkable polymer composition**
Thermisch vernetzbare Einkomponenten-Polymerzusammensetzung
Composition à un composant thermodurcissable

(43) Date of publication of application: 04.10.2001
(73) Proprietor: SUNSTAR GIKEN KABUSHIKI KAISHA, Osaka-fu (JP)
(72) Inventor: Okamoto, Hirokazu, Nagaokakyo-shi, Kyoto-fu (JP); Mori, Masahito, Takatsuki-shi, Osaka-fu (JP)
(74) Representative: Albrecht, Thomas

(56) References cited:
- EP-A- 0 322 138
- EP-A- 0 336 744
- EP-A- 0 367 165
- EP-B- 0 070 168
- DE-A- 2 853 477
- DATABASE WPI Section Ch, Week 199116 Derwent Publications Ltd., London, GB; Class A14, AN 1991-115616 XP002146016 & SU 1 565 868 A (GENERALOVA A YU), 23 May 1990 (1990-05-23)
- DATABASE WPI Section Ch, Week 199927 Derwent Publications Ltd., London, GB; Class A81, AN 1999-323815 XP002146017 & JP 11 116928 A (KANSAI PAINT CO LTD), 27 April 1999 (1999-04-27)
- DATABASE WPI Week 8149 Derwent Publications Ltd., London, GB; AN 1981-89913 XP002146018 & JP 56 135579 A (NITTO ELECTRIC KK)

## Description

### BACKGROUND OF THE INVENTION

### Field of the Invention

The present invention relates to a one-pack type thermally crosslinkable polymer composition. In particular, the present invention relates to a one-pack type thermally crosslinkable polymer composition comprising a specific thermoplastic polymer and a polyamine compound as a latent curing agent, which composition is useful as an adhesive for adhering a substrate layer and a skin material of an interior part for automobiles, in particular, as an adhesive for precoating a skin material.

### Prior Art

As interior parts of automobiles, laminates comprising substrate layers and skin materials laminated on the substrate layers have been used to improve quality. Such a laminate is produced by a vacuum molding or press molding method in which an adhesive is applied to either one or both of the substrate layer and the skin material, and the molding and adhering are performed at the same time.

In such a molding method, a solvent-base adhesive is generally used, which comprises a polyesterpolyurethane containing a polyester as a polyol component dissolved in a solvent. However, this type of an adhesive has insufficient heat resistance required for the use in automobile interior applications, and a two-pack type adhesive containing a polyisocyanate as a curing agent is practically used. Such a two-pack type adhesive has some drawbacks such that it causes the environmental pollution since the adhesive is spray coated in a parts-molding line, and that the working time for mixing, coating and molding/adhering is restricted since two liquid components are reacted on mixing and cured.

EP 0 322 138 A2 relates to an adhesive composition which contains a thermoplastic elastomeric polymer which includes ethylene propylene rubber, ethylene propylene diene monomer, polyisobutylene butyl rubber, ethylene vinyl acetate graft copolymers thereof with C₃ to C₁₀ unsaturated mono- and polycarboxylic acids, a tackifying resin and a di- or polyamine cross-linking agent having 2-10 carbon atoms, which is useful as a hot melt or pressure sensitive adhesive having enhanced higher temperature properties.

EP 0 336 744 A2 relates to an adhesive composition comprising a modified, ethylene/α-olefin copolymer rubber or a modified, ethylene/α-olefin/non-conjugated diene copolymer rubber containing 0.1-10% by weight of at least one member selected from the group consisting of an acid anhydride and a dicarboxylic acid.

EP 0 367 165 A1 discloses a cross-linkable hot melt sealant composition comprising (1) 20%-40% of a thermoplastic Elastomer block copolymer, (2) 40%-60% of a hydrogenated hydrocarbon tackifying resin, (3) 10%-30% of an aromatic hydrocarbon resin, (4) 10%-20% of an unsaturated acid anhydride-modified polymer and (5) 1%-3% of a difunctional amine cross-linking agent.

Database WPI Section Ch, Week 199116 AN 1991-115616; XP 002146016 discloses a one-pack type adhesive composition comprising a thermoplastic butylacrylate-vinylacetate-acrylic acid copolymer having carboxylic acid groups and a hydrazine-based compound as crosslinker.

### SUMMARY OF THE INVENTION

An object of the present invention is to provide a one-pack type thermally crosslinkable polymer composition which can solve the above drawbacks of the conventional adhesives, and which is useful, for example, as an adhesive for precoating a skin material in the production of an interior part of an automobile.

Accordingly, the present invention provides a one-pack type thermally crosslinkable polymer composition comprising a thermoplastic polymer having a carboxylic acid group or an acid anhydride group selected from the group consisting of olefinic polymers, butadiene polymers, ester polymers, carbonate polymers, urethane polymers and amide polymers, all of which have a carboxylic acid group or an acid anhydride group, and at least one latent curing agent selected from the group consisting of a hydrazide-base polyamine and a hydrolyzable reaction product obtained by the reaction of a diamine having two amino or imino groups in a molecule, and a carbonyl compound.

The one-pack type adhesive of the present invention can be stored at room temperature without the occurrence of a reaction, and crosslinked at a temperature of 60°C or higher to exert good adhesion strength with good heat resistance. In addition, the polymer composition can avoid the use of any solvent in the production of a laminate having a skin material, when it is precoated on the skin material.

### DETAILED DESCRIPTION OF THE INVENTION

The thermoplastic polymers having a carboxylic acid group or an acid anhydride group are selected from the group consisting of olefinic polymers, butadiene polymers, ester polymers, carbonate polymers, urethane polymers and amide polymers, all of which have a carboxylic acid group or an acid anhydride group. In particular, olefinic polymers having a carboxylic acid group or an acid anhydride group is preferable from the viewpoint of adhesion properties to polyolefins.

Typical examples of such thermoplastic polymers include polypropylene (PP), styrene-ethylene/butene-styrene copolymers (SEBS), ethylene-vinyl acetate copolymers (EVA), ethylene-acrylate copolymers (EEA), and the like, each of which is modified by the introduction of a dibasic unsaturated acid (e.g. maleic acid, fumaric acid, citraconic acid, mesaconic acid, etc.) or its anhydride. Such modified polymers are known and commercially available.

Hereinafter, thermoplastic polymers having a carboxylic acid group or an acid anhydride group will be referred to as "COOH-modified polymers".

Polyamine compounds used as latent curing agents are divided into the following two classes (I) and (II):
(I) Solid polyamine compounds having a melting point of 60°C or higher, preferably 80 to 200°C, i.e. hydrazide base polyamines such as 1,3-bis(hydrazinocarboethyl)-5-isopropylhydantoin of the formula: 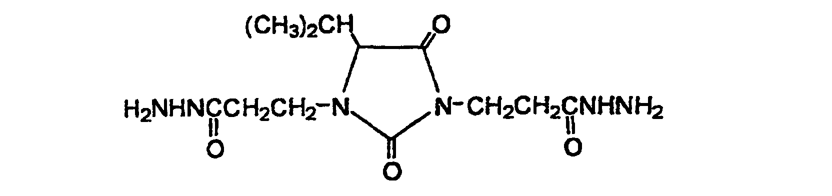 (melting point: 121-123°C), the compound of the formula: NH₂NHCO-(CH₂)₁₈-CONHNH₂ (melting point: 174-181°C), the compound of the formula: NH₂NHCO-(CH₂)₆-CH=CH-(CH₂)₂-CH=CH-(CH₂)₆-CONHNH₂ (melting point: 147-155°C); and the like. These polyamines may be used singly or in admixture of two or more.
   An amount of the polyamine to be used is at least an equivalent amount to the carboxyl groups of the COOH-modified polymer. When the amount of the polyamine is less than the equivalent amount, the crosslinking of the polymer is insufficient, and the heat resistance of the cured material deteriorates. When the amount of the polyamine is too large, the curing agent is liberated, so that adherents may be insufficiently adhered. Accordingly, a preferred amount of the polyamine to be used is one to 10 times the equivalent amount.
(II) Hydrolyzable reaction products obtained by the reaction of diamines having two amino or imino groups in a molecule, and carbonyl compounds (aldehydes or ketones)
   Examples of such diamines include aliphatic diamines (e.g. dimethylaminopropylamine, diethylaminopropylamine, monomethylaminopropylamine, methyliminobispropylamine, hexamethylenediamine, 1,10-diaminododecane, ethylenediamine, propylenediamine, butylenediamine, diethylenetriamine, di-β-aminoethylsulfide, di-β-aminoethyldisulfide, di-β-aminoethylether, di-γ-amino-n-propylether, triglycoldiamine, N,N-dibutyltrimethylhexamethylenediamine, etc.); alicyclic diamines (e.g. 1,8-p-menhanediamine, isophoronediamine, diaminocyclohexane, 4,4'-methylenebis(cyclohexylamine), 1,3-bisaminomethylcyclohexane, 3-aminomethyl-3,3,5-trimethylcyclohexylamine, N,N'-butylisophoronediamine, N-aminoethylpiperazine, 3-(3-aminopropyl)-3,2-dimethylpiperazine, etc.); aromatic or aromatic aliphatic diamines (e.g. xylylenediamine, diaminodiphenylether, phenylenediamine, triamionxylene, 4,4'-diaminodiphenylmethane, 4,4'-diaminodiphenylpropane, 4,4'-diaminodiphenylether, etc.); and the like. In particular, aliphatic diamines having 8 or more carbon atoms are preferred.

The above carbonyl compound is generally represented by the formula:

R₁-CO-R₂

wherein R₁ and R₂ are the same or different and represent a hydrogen atom, a lower alkyl group having 1 to 8 carbon atom, preferably 1 to 6 carbon atoms (e.g. a methyl group, an ethyl group, a n-propyl group, an isopropyl group, a n-butyl group, an isobutyl group, a tert.-butyl group, etc.), a phenyl group or a naphthyl group, or R₁ and R₂ together form a cyclic hydrocarbon group (e.g. a cyclohexyl group or a cyclopentyl group, etc.), provided that R₁ and R₂ are not hydrogen atoms or naphthyl groups at the same time.

Specific examples of the carbonyl compound include aliphatic aldehydes (e.g. acetaldehyde, propionaldehyde, n-butylaldehyde, isobutylaldehyde, diethylacetoaldehyde, etc.), aromatic aldehydes (e.g. benzaldehyde, etc.), cyclic ketones (e.g. cyclopentanone, trimethylcyclopentanone, cyclohexanone, trimethylcyclohexanone, etc.), aliphatic ketones (e.g. acetone, methyl ethyl ketone, methyl propyl ketone, methyl isopropyl ketone, methyl isobutyl ketone, diethyl ketone, dipropyl ketone, diisopropyl ketone, dibutyl ketone, diisobutyl ketone, etc.); and the like.

The diamine and the carbonyl compound may be reacted under conventional conditions. For example, the diamine and an equivalent or excessive amount of the carbonyl compound in relation to the diamine are reacted in a suitable solvent (e.g. toluene, xylene benzene, etc.), optionally in the presence of a water absorbent (e.g. molecular sieves, anhydrous magnesium sulfate, etc.) at room temperature or an elevated temperature while removing water. Thus, a hydrolyzable reaction product is obtained. Here, a reaction product obtained using an aldehyde as a carbonyl compound is referred to as "aldimine", while one obtained using a ketone as a carbonyl compound is referred to as "ketimine".

Ketimines are usually less stable and more easily hydrolyzed than aldimines. That is, aldimines having a relatively low molecular weight have good storage stability, while ketimines having a low molecular weight are unstable. Thus, solid diamines having a relatively high molecular weight and good stability (low activity) are preferably used to prepare ketimines. More preferably, a reaction medium, which functions also as a carbonyl compound, is used, since the reaction is always in an equilibrium state.

An amount of the aldimine or the ketimine may be at least an equivalent amount to the carboxyl groups of the above COOH-modified polymer. When the amount of the aldimine or the ketimine is less than the equivalent amount, the degree of crosslinking is insufficient, and thus the cured material of the composition has low heat resistance. When the amount of the aldimine or the ketimine is too excessive, the adhesion of the adherents with the composition may be insufficient. Accordingly, a preferred amount of the polyamine to be used is one to 10 times the equivalent amount.

The one-pack type thermally crosslinkable polymer composition of the present invention preferably comprises the COOH-modified polymer, the solid polyamine (I) or the aldimine or ketimine (II), which are dispersed in the above specific ratio in a suitable organic solvent (e.g. toluene, xylene, benzene, 1,1,1-trichloroethane, methylene chloride, etc.). If desired, the one-pack type thermally crosslinkable polymer composition of the present invention may optionally contain a conventional thermoplastic resin (e.g. acrylic resin, vinyl resin, polyamide resin, polyester resin, polyolefin, polyurethane, SEBS, etc.), tackifiers, polyolefin-base tackifiers, dyes, pigments, etc.

The one-pack type thermally crosslinkable polymer composition of the present invention having the above composition can be used as an adhesive, a coating material, an adhesive sheet, a film or sheet-form adhesive, a paint, and the like. In particular, the one-pack type thermally crosslinkable polymer composition of the present invention is useful as an adhesive which is used in the production of laminates for automobile interior parts, which comprise a substrate layer (e.g. ABS boards, polyphenylene oxide (NORYL®) boards, ASG boards, polycarbonate boards, polypropylene boards, wood composite boards, steel plates, etc.) and skin materials (e.g. polyvinyl chloride foams, polyolefin foams such as polyethylene foams, polypropylene foams, etc.).

The production steps of such laminates will be explained in detail.

i) Firstly, the polymer composition of the present invention is precoated in a thickness of 5 to 500 µm uniformly on the surface of a skin material, and dried at a temperature of room temperature to 100°C. The dry thickness of the composition is from 20 to 300 µm.

Alternatively, the polymer composition of the present invention may be discontinuously coated on the surface of a skin material. For example, the polymer composition may be coated in a linear (or bead) form or a dot form. In the case of discontinuous coating, the amount of the polymer composition can be reduced to about half to two thirds of the amount in the case of the overall area coating. The polymer composition may be discontinuously applied with a multi-nozzle, or transferred with a roll or a doctor knife coater

By the above application methods, an adhesive layer having no blocking properties is formed on the skin material. The precoated skin material may be supplied to a following molding process as such, or it may be stored for a certain time, for example, several months at a temperature of room temperature to 100°C and then supplied to the molding process. Even when the precoated skin material is stored for a long time, it can exert a sufficient adhesion force.

When a latent curing agent in the adhesive layer of the precoated skin material is the aldimine or the ketimine, it tends to be easily hydrolyzed with moisture (or water) in an air to form a free amine and to cause the hydrolysis. Thus, the precoated skin material should be stored in a dry state in a sealed container during the storage or in the period prior to molding in a subsequent step.

ii) Then, the precoated skin material produced in the step i) is laminated on a substrate heated at a specific temperature (usually around 80°C) while optionally heating the skin material at a certain temperature (usually from 100 to 160°C), if desired, and heat pressed under a pressure of 0.1 kg/cm² or more for at least 10 seconds to effect the molding and adhering at the same time. Thus, a laminate having good heat resistant adhesion properties. In addition, such a molding process can prevent environmental pollution caused by the evaporation of solvents.

Such laminates can be used as automobile interior parts such as inside trims (e.g. door trims, front pillars, deck side trims, center pillars, etc.), instrument panels, molded ceilings, console boxes, and the like.

In the above, the polymer composition of the present invention is explained in connection with its application as a precoating adhesive of skin materials, although it can be advantageously used as a thermally crosslinkable adhesive film, sheet or tape having a thickness of 50 to 500 µm by forming, that is, coating and drying, the composition on a suitable support such as a release paper. In such a case, the properties of the film may be adjusted by the addition of the above-described thermoplastic resins.

### EXAMPLES

The present invention will be explained further in detail by following Examples, which do not limit the scope of the invention.

### Examples 1-3 and Comparative Examples 1 and 2

### 1) Preparation of adhesive

A COOH-modified polymer, a thermoplastic resin, a tackifier and a solid polyamine compound shown in Table 1 were added to and dispersed in a mixed solvent of toluene and cyclohexane (volume ratio of 1:1) by mixing at 60°C for 2 hours to obtain an adhesive.

With the prepared adhesive, the blocking tendency was evaluated as follows. The result is shown in Table 1.

### Blocking tendency

The adhesive was coated on a skin layer of a polypropylene foam (PPF) laminated with a thermoplastic polypropylene layer (TPO), and dried. Then, a pair of dried precoated skin materials (TPO/PPF/Adhesive) were laminated with facing the adhesive layer of one skin material with the TPO of the other and kept standing at 60°C for 72 hours while applying a load of 0.5 kg/cm². Immediately thereafter, the upper skin material was lifted up, and the blocking state was observed, and ranked as follows:
O: The skin materials were not blocked, and the lower skin material was not lifted up together.
X: The skin materials were blocked, and the skin materials were lifted up together.

### 2) Production of laminated molded article and evaluation of adhesion

The adhesive prepared in the above step 1) was coated in a thickness of 500 µm on a polyethylene foam skin material having a thickness of 3 mm, and dried at 60°C for 5 minutes to obtain a precoated skin material.

Then, the precoated skin material was heated to a temperature of 120 to 130°C with a far infrared heater and laminated on a polypropylene board which had been heated at 80°C for 2 minutes, followed by compressing under a load of 0.5 kg/cm² for 20 seconds to obtain a laminated molded article.

With the produced laminated molded article, an initial creep, an initial peel strength and heat resistant creep were measured under the following conditions

### Initial creep

Immediately after the production of the molded article, a load of 200 g/25 mm was applied in the 90 degree angle direction in an atmosphere of 60°C. After 5 minutes, the peeled length (mm) was measured.

### Initial peel strength

A peel strength was measured after 5 minutes from the completion of the lamination.

### Heat resistant creep

After keeping the laminated molded article at 20°C for 24 hours, a load of 200 g/25 mm was applied in the 90 degree angle direction in an atmosphere of 90°C. After 24 hours, the peeled length (mm) was measured.

The results are shown in Table 1, in which "CF" stands for cohesive failure, and "MB" stand for the breakage of the skin material. In Comparative Example 2, the composition was gelled in the course of the preparation. Thus, no test was carried out.

**Table 1**

| | Example No. | | | C. Ex. No. | |
|---|---|---|---|---|---|
| | 1 | 2 | 3 | 1 | 2 |
| Maleic anhydride-modified PP¹⁾ | 100 | -- | -- | 100 | 100 |
| Maleic anhydride-modified SEBS²⁾ | -- | 100 | -- | -- | -- |
| COOH-modified PB³⁾ | -- | -- | 100 | -- | -- |
| SEBS⁴⁾ | 20 | 20 | 20 | 20 | 20 |
| Tackifier⁵⁾ | 100 | 100 | 100 | 100 | 100 |
| Hydrazide-base polyamine⁶⁾ | 30 | 30 | 30 | -- | -- |
| Hexamethylene diamine (melting point: 39-42°C) | -- | -- | -- | -- | 15 |
| Mixed solvent | 700 | 700 | 700 | 700 | 700 |
| Blocking tendency | O | O | O | X | -- |
| Initial creep (mm) | 3 CF | 4 CF | 4 CF | 30 CF | -- |
| Initial peel strength (kg/25 mm) | 2.3 MB | 2.2 MB | 2.2 MB | 2.3 MB | -- |
| Heat resistant creep (mm) | 0 | 0 | 0 | Fall | -- |

| | | | | | |
|---|---|---|---|---|---|
| Notes: 1) MTPP (trade name) manufactured by TOYO KASEI Co., Ltd. | | | | | |
| 2) TOUGHTECK (trademark) M-1953 manufactured by Asahi Chemical Industry Co., Ltd. | | | | | |
| 3) M-2000-80 (trade name)manufactured by NIPPON PETROCHEMICAL CO., LTD. | | | | | |
| 4) TOUGHTECK (trademark) H-1042 manufactured by Asahi Chemical Industry Co., Ltd. | | | | | |
| 5) NEOPOLYMER 140 manufactured by NIPPON PETROCHEMICAL CO., LTD. | | | | | |
| 6) 1,3-Bis(hydrazinocarboethyl)-5-isopropylhydantoin (melting point: 120-123°C) | | | | | |

### Example 4

A laminated molded article was prepared in the same manner as in Example 1 except that the polymer composition was coated on a polyethylene foam skin material as follows:

### Overall coating:

The polymer composition was spray coated on the skin material of a polypropylene foam to a thickness of 650 g/m² (dry thickness of 100 µm), and dried at 60°C for 5 minutes to obtain a precoated skin material.

### Bead coating:

1. The polymer composition was coated in the form of a bead having a diameter of about 2 mm in an amount of a half of the coated amount in the case of the 100 µm dry thickness.
2. The polymer composition was coated in the form of a bead having a diameter of about 4 mm in an amount of two thirds of the coated amount in the case of the 100 µm dry thickness.

### Dot coating:

1. The polymer composition was coated in the form of a square having a side of 4 mm in an amount of a half of the coated amount in the case of the 100 µm dry thickness.
2. The polymer composition was coated in the form of a square having a side of 8 mm in an amount of two thirds of the coated amount in the case of the 100 µm dry thickness.

Then, the initial creep, initial peel strength and heat resistant creep were measured in the same manner as in Example 1. The results are shown in Table 2.

**Table 2**

| | Overall coating | Bead coating (lateral)¹⁾ | | Dot coating | |
|---|---|---|---|---|---|
| | | 1/2 | 1/3 | 1/2 | 2/3 |
| Initial creep (mm) | 2 CF | 2 CF | 4 CF | 10 CF | 2 CF |
| Initial peel strength (kg/25 mm) | 5.1 MB | 4.7 MB | 5.5 MB | 4.5 MB | 6.7 MB |
| Heat resistant creep (mm) | 0 | 1.3 | 4 | Fall | 0 |

| | | | | | |
|---|---|---|---|---|---|
| Note: 1) "Bead coating (lateral)" means that the creep was in the direction perpendicular to the coating direction of beads. | | | | | |

An amount of the coated polymer composition can be decreased while keeping the good adhesion properties when it is discontinuously coated.

### Examples 5 and 6

### 1) Preparation of adhesive

The components shown in Table 3 were mixed and dispersed in the same manner as in Example 1 to obtain an adhesive.

The aldimine and the ketimine used in these Examples were prepared as follows:

### Preparation of aldimine

In a reactor vessel replaced with nitrogen gas, hexamethylenediamine (50 wt. parts), a water-absorbent (molecular sieve) (90 wt. parts) and absolute toluene (50 wt. parts) were charged. Then, benzaldehyde (100 wt. parts) was gradually added to the stirred mixture and reacted while cooling at 10°C.

### Preparation of ketimine

In a reactor vessel replaced with nitrogen gas, 1,10-diaminododecane (50 wt. parts), acetone (100 wt. parts) and a water-absorbent (molecular sieve) (70 wt. parts) were charged at once and reacted.

### 2) Production of laminated molded article and evaluation of adhesion

An adhesive was coated in the thickness of 500 µm on the skin layer of PPF laminated with TPO, which was used in the above evaluation of the blocking tendency, and dried at 60°C for 5 minutes to obtain a precoated skin material. Then, the precoated skin material was kept in a sealed container.

The precoated skin material was taken out of the container one day before the use, and maintained at room temperature to effect the hydrolysis of the adhesive. Then, the precoated skin material was laminated on a polypropylene board, which had been heated at 80°C for 2 minutes, under a load of 0.5 kg/cm² for 20 seconds while heating the skin material at 120 to 130°C to obtain a laminate. The results of the same adhesion property tests as those in Examples 1-3 are shown in Table 3.

**Table 3**

| | Example No. | |
|---|---|---|
| | 5 | 6 |
| Maleic anhydride-modified PP | 100 | 100 |
| SEBS | 20 | 20 |
| Tackifier | 100 | 100 |
| Aldimine | 30 | -- |
| Ketimine | -- | 30 |
| Mixed solvent | 700 | 700 |
| Blocking tendency | O | O |
| Initial creep (mm) | 2 CF | 2 CF |
| Initial peel strength (kg/25 mm) | 2.2 MB | 2.3 MB |
| Heat resistant creep (mm) | 0 | 0 |

From the above results, the polymer compositions of the present invention prepared in Examples 1 to 6 have good initial adhesion strength, and heat resistant adhesion strength.

## Claims

1. A one-pack type thermally crosslinkable polymer.composition comprising a thermoplastic polymer having a carboxylic acid group or an acid anhydride group selected from the group consisting of olefinic polymers, butadiene polymers, ester polymers, carbonate polymers, urethane polymers and amide polymers, all of which have a carboxylic acid group or an acid anhydride group, and at least one latent curing agent selected from the group consisting of a hydrazide-base polyamine and a hydrolyzable reaction product obtained by the reaction of a diamine having two amino or imino groups in a molecule, and a carbonyl compound.

2. The one-pack type thermally crosslinkable polymer composition according to claim 1, wherein said thermoplastic polymer having a carboxylic acid group or an acid anhydride group is an olefinic polymer having a carboxylic acid group or an acid anhydride group.

3. The one-pack type thermally crosslinkable polymer composition according to claim 1, wherein said thermoplastic polymer having a carboxylic acid group or an acid anhydride group is polypropylene or a styrene-ethylene/butene-styrene copolymer, which is modified with maleic anhydride.

4. The one-pack type thermally crosslinkable polymer composition according to claim 1, wherein said polyamine compound is a solid polyamine compound having a melting point of at least 60°C.

5. The one-pack type thermally crosslinkable polymer composition according to claim 4, wherein said solid polyamine compound has a melting point of 80 to 200°C.

6. The one-pack type thermally crosslinkable polymer composition according to claim 1, wherein said hydrazide-base polyamine is 1,3-bis(hydrazinocarboethyl)-5-isopropylhydantoin having a melting point of 120 to 123°C.

7. Use of a one-pack type thermally crosslinkable polymer composition according to claim 1 as an adhesive for precoating an adherent.

8. A precoated skin material comprising a skin material for an automobile interior part, and the one-pack type thermally crosslinkable polymer composition according to claim 1 which is coated on the surface of said skin material.

9. The precoated skin material according to claim 8, wherein said composition is discontinuously coated on the surface of said skin material.

10. The precoated skin material according to claim 9, wherein said composition is coated on the surface of said skin material in the linear form or a dot form.

11. The precoated skin material according to claim 9, wherein the applied amount of said composition is half to two thirds of an amount in the case of overall area coating.

12. A thermally crosslinkable adhesive film produced by forming the one-pack type thermally crosslinkable polymer composition according to claim 1.

13. The thermally crosslinkable adhesive film according to claim 12, wherein said one-pack type thermally crosslinkable polymer composition further comprises a thermoplastic resin.

14. A laminated molded article for an automobile interior part, comprising a substrate layer, and the precoated skin material according to claim 8 which is adhered to said substrate layer by vacuum molding or press molding.

## Patentansprüche

1. Thermisch vernetzbare Einkomponenten-Polymerzusammensetzung, umfassend: ein thermoplastisches Polymer, das eine Carbonsäuregruppe oder eine Säureanhydridgruppe hat, ausgewählt aus der Gruppe, die aus Polyolefinen, Butadien-Polymeren, Polyestern, Polycarbonaten, Polyurethanen und Polyamiden besteht, von denen alle eine Carbonsäuregruppe oder eine Säureanhydridgruppe haben, und mindestens ein latentes Härtemittel, ausgewählt aus der Gruppe, bestehend aus Polyaminen auf Hydrazidbasis und einem hydrolysierbaren Reaktionsprodukt, welches durch die Reaktion eines Diamins, das zwei Amino- oder Iminogruppen in einem Molekül hat, und einer Carbonylverbindung erhalten wird.

2. Thermisch vernetzbare Einkomponenten-Polymerzusammensetzung nach Anspruch 1, wobei das genannte thermoplastische Polymer, welches eine Carbonsäuregruppe oder eine Säureanhydridgruppe hat, ein Polyolefin ist, welches eine Carbonsäuregruppe oder eine Säureanhydridgruppe hat.

3. Thermisch vernetzbare Einkomponenten-Polymerzusammensetzung nach Anspruch 1, wobei das genannte thermoplastische Polymer, welches eine Carbonsäuregruppe oder eine Säureanhydridgruppe hat, ein Polypropylen oder ein Styrol-Ethylen/Buten-Styrol Copolymer ist, welches mit Maleinsäureanhydrid modifiziert wurde.

4. Thermisch vernetzbare Einkomponenten-Polymerzusammensetzung nach Anspruch 1, wobei die genannte Polyaminverbindung eine feste Polyaminverbindung ist, die einen Schmelzpunkt von mindestens 60 °C hat.

5. Thermisch vernetzbare Einkomponenten-Polymerzusammensetzung nach Anspruch 4, wobei die genannte feste Polyaminverbindung einen Schmelzpunkt von 80 bis 200 °C hat.

6. Thermisch vernetzbare Einkomponenten-Polymerzusammensetzung nach Anspruch 1, wobei das genannte Polyamin auf Hydrazidbasis 1,3-Bis(hydrazinocarboethyl)-5-isopropylhydantoin ist und einen Schmelzpunkt von 120 bis 123 °C hat.

7. Verwendung einer thermisch vernetzbaren Einkomponenten-Polymerzusammensetzung nach Anspruch 1 als Kleber zum Precoating einer Klebefläche.

8. Vorbeschichtetes bzw. precoated Hautmaterial, das ein Hautmaterial für einen Teil des Innenraums eines Automobils umfasst und die thermisch vernetzbare Einkomponenten-Polymerzusammensetzung nach Anspruch 1, die auf der Oberfläche des genannten Hautmaterials aufgetragen ist.

9. Vorbeschichtetes Hautmaterial nach Anspruch 8, wobei die genannte Zusammensetzung diskontinuierlich auf der Oberfläche des genannten Hautmaterials aufgetragen ist.

10. Vorbeschichtetes Hautmaterial nach Anspruch 9, wobei die genannte Zusammensetzung linear oder punktförmig auf die Oberfläche des genannten Hautmaterials aufgetragen ist.

11. Vorbeschichtetes Hautmaterial nach Anspruch 9, wobei die aufgebrachte Menge der genannten Zusammensetzung die Hälfte bis Zweidrittel der Menge einer vollständigen Beschichtung der gesamten Fläche ist.

12. Thermisch vernetzbarer klebender Film, der durch Formen der thermisch vernetzbaren Einkomponenten-Polymerzusammensetzunq nach Anspruch 1 produziert wurde.

13. Thermisch vernetzbarer klebender Film nach Anspruch 12, wobei die thermisch vernetzbare Einkomponenten-Polymerzusammensetzung zusätzlich ein thermoplastisches Harz umfasst.

14. Laminierter ausgeformter Artikel für Teile des Innenraums von Automobilen, der eine Trägermaterialschicht und das vorbeschichtete Hautmaterial nach Anspruch 8 umfasst, welches an die genannte Trägermaterialschicht durch Vakuumausformung oder Formpressung angeklebt wurde.

## Revendications

1. Composition polymère à un composant thermoréticulable comprenant un polymère thermoplastique ayant un groupe acide carboxylique ou un groupe anhydride d'acide choisi dans le groupe constitué par des polymères oléfiniques, des polymères de butadiène, des polymères d'ester, des polymères de carbonate, des polymères d'uréthane et des polymères d'amide, dont tous ont un groupe acide carboxylique ou un groupe anhydride d'acide, et au moins un durcisseur latent choisi dans le groupe constitué par une polyamine à base d'hydrazide et un produit réactionnel hydrolysable obtenu par la réaction d'une diamine ayant deux groupes amino ou imino dans une molécule, et un composé carbonyle.

2. Composition polymère à un composant thermoréticulable selon la revendication 1, dans laquelle ledit polymère thermoplastique ayant un groupe acide carboxylique ou un groupe anhydride d'acide est un polymère oléfinique ayant un groupe acide carboxylique ou un groupe anhydride d'acide.

3. Composition polymère à un composant thermoréticulable selon la revendication 1, dans laquelle ledit polymère thermoplastique ayant un groupe acide carboxylique ou un groupe anhydride d'acide est un polypropylène ou un copolymère styrène-éthylène/butène-styrène, qui est modifié par un anhydride maléique.

4. Composition polymère à un composant thermoréticulable selon la revendication 1, dans laquelle ledit composé polyamine est un composé polyamine solide ayant un point de fusion d'au moins 60°C.

5. Composition polymère à un composant thermoréticulable selon la revendication 4, dans laquelle ledit composé polyamine solide a un point de fusion de 80 à 200°C.

6. Composition polymère à un composant thermoréticulable selon la revendication 1, dans laquelle ladite polyamine à base d'hydrazide est la 1,3-bis(hydrazinocarboéthyl)-5-isopropyl-hydantoïne ayant un point de fusion de 120 à 123°C.

7. Utilisation d'une composition polymère à un composant thermoréticulable selon la revendication 1 comme colle pour préenrober un adhésif.

8. Matériau formant pellicule préenrobée comprenant un matériau formant pellicule pour une pièce intérieure d'automobile, et composition polymère à un composant thermoréticulable selon la revendication 1 qui est appliquée sur la surface dudit matériau formant pellicule.

9. Matériau formant pellicule préenrobée selon la revendication 8, dans lequel ladite composition est appliquée de manière discontinue sur la surface dudit matériau formant pellicule.

10. Matériau formant pellicule préenrobée selon la revendication 9, dans lequel ladite composition est appliquée sur la surface dudit matériau formant pellicule sous la forme linéaire ou une forme ponctuelle.

11. Matériau formant pellicule préenrobée selon la revendication 9, dans lequel la quantité appliquée de ladite composition représente de la moitié aux deux tiers d'une quantité dans le cas d'un enrobage total de la surface.

12. Film adhésif thermoréticulable fabriqué en formant la composition polymère à un composant thermoréticulable selon la revendication 1.

13. Film adhésif thermoréticulable selon la revendication 12, dans lequel ladite composition polymère à un composant thermoréticulable comprend en outre une résine thermoplastique.

14. Article moulé stratifié pour pièce intérieure d'automobile, comprenant une couche de substrat, et le matériau formant pellicule préenrobée selon la revendication 8 qui est collé à ladite couche de substrat par moulage sous vide ou moulage sous pression.
